**Europäisches Patentamt**

**European Patent Office**

**Office européen des brevets**

(19)

(11) Veröffentlichungsnummer: **0 401 409**

**A1**

(12)

# EUROPÄISCHE PATENTANMELDUNG

(21) Anmeldenummer: **89110380.6**

(51) Int. Cl.⁵: **B09B 3/00**

(22) Anmeldetag: **08.06.89**

(43) Veröffentlichungstag der Anmeldung:
**12.12.90 Patentblatt 90/50**

(84) Benannte Vertragsstaaten:
**AT BE CH DE ES FR GB GR IT LI LU NL SE**

(71) Anmelder: **Altvater & Co. GmbH**
**Bünder Strasse 85**
**D-4900 Herford(DE)**

(72) Erfinder: **Ullrich, Peter**
**Detmolderstrasse 39**
**D-4797 Schlangen(DE)**
Erfinder: **Tuminski, Ralf, Dr.**
**Maschbruchstrasse 3**
**D-4980 Bünde(DE)**
Erfinder: **Weber, Gerd**
**Pestalozzistrasse 23**
**D-8570 Pegnitz(DE)**

(74) Vertreter: **Busse & Busse Patentanwälte**
**Postfach 1226 Grosshandelsring 6**
**D-4500 Osnabrück(DE)**

(54) **Verfahren zur Beseitigung von Klärschlamm.**

(57) Bei einem Verfahren zur Beseitigung von Klärschlamm und dgl. Schlammprodukten gemeinsam mit Hausmüll und dgl. festen Abfällen wird der feste Abfall von Müllsammelfahrzeugen (1) mit einem eine Mischeinrichtung umfassenden behälterförmigen Müllsammelaufbau (2) aufgenommen und zu einem Zielort, z.B. einer Verbrennungsanlage, transportiert, wobei dem Müllsammelaufbau des Fahrzeugs vor Erreichen des Zielortes, d.h. während der Müllsammeltour, eine Menge des Schlamms zugegeben wird. Bei der fortgesetzten Müllsammeltour bzw. während des Transports zum Zielort werden der feste Abfall und der Schlamm im Müllsammelaufbau (2) des Fahrzeugs zu einem Abfall-Schlamm-Gemisch vermischt, das ohne weiteres in der bei festen Abfällen üblichen Weise weiterbehandelt oder entsorgt werden kann.

FIG.1

## Verfahren zur Beseitigung von Klärschlamm

Die Erfindung bezieht sich auf ein Verfahren zur Beseitigung von Klärschlamm und dgl. Schlammprodukten gemeinsam mit Hausmüll und dgl. festen Abfällen, bei dem der Schlamm mit dem festen Abfall vermischt und das Abfall-Schlamm-Gemisch einem weiteren oder abschließenden Behandlungs- bzw. Entsorgungsschritt unterzogen wird, sowie auf geeignete Mittel zur Ausübung des Verfahrens.

Zur Beseitigung der in den lezten Jahrzehnten ständig gestiegenen und weiter ansteigenden Mengen von Klärschlamm und dgl. Schlammprodukten sind bereits zahlreiche Verfahren bekannt geworden, bei denen der Klärschlamm zusammen mit festen Abfällen, wie insbesondere Hausmüll, verarbeitet wird, indem der Schlamm mit dem festen Abfall vermischt und das so entstehende Gemisch weiter verarbeitet bzw. behandelt wird, um es einer Kompostierung, Deponielagerung oder auch Verbrennung zuzuführen. Diese bekannten Verfahren werden sämtlich in stationären Anlagen betrieben, die vorzugsweise in unmittelbarer Nähe einer Kläranlage bzw. dem Ort der Entstehung der zu beseitigenden Schlammprodukte angesiedelt sind. Dies hat seinen Grund in den Problemen, die mit dem Transport der üblicherweise schadstoffbelasteten Klärschlämme verbunden sind und hohe Transportkosten verursachen. Man ist daher bestrebt, die Transportwege für Klärschlämme möglichst kurz zu halten und hierfür Rohrleitungen einzusetzen, durch die der Schlamm hindurchgepumpt werden kann. In allen anderen Fällen müssen für den Transport des Klärschlamms zur Weiterverarbeitungs- bzw. Behandlungsanlage Tankwagen in Sonderausführung eingesetzt werden, die einen erheblichen Kostenfaktor darstellen. Diese Probleme treten vermehrt in ländlichen Gebieten auf, in denen eine größere Anzahl kleinerer, räumlich verteilter Kläranlagen von den anfallenden Klärschlammengen entsorgt werden müssen.

Der Erfindung liegt in erster Linie die Aufgabe zugrunde, ein Verfahren zur Beseitigung von Klärschlamm und dgl. Schlammprodukten gemeinsam mit Hausmüll und dgl. festen Abfällen der eingangs angegebenen Art zu schaffen, bei dem die Transportprobleme, die beim Transportieren des Schlammes insbesondere über längere Wegstrekken zum Ort der Weiterverarbeitung bzw. Entsorgung entstehen, weitgehend vermieden sind.

Diese Aufgabe wird nach der Erfindung dadurch gelöst, daß der feste Abfall von Müllsammelfahrzeugen mit einem eine Mischeinrichtung umfassenden behälterförmigen Müllsammelaufbau aufgenommen und zu einem Zielort transportiert wird, dem Müllsammelaufbau des Fahrzeugs vor Erreichen des Zielortes eine Menge des Schlamms zugegeben wird und der feste Abfall und der Schlamm während des Transports zum Zielort miteinander zu dem Abfall-Schlamm-Gemisch im Müllsammelaufbau des Fahrzeugs vermischt werden.

Bei dem Verfahren nach der Erfindung wird demnach der Transport des Klärschlamms zu einem Zielort, wie einer Verbrennungs- oder Kompostierungsanlage oder einer Deponie, in den Transport stückiger bzw. fester Abfälle wie Hausmüll, hausmüllähnlicher Abfälle bzw. Gewerbe- und Industrieabfälle, zu dem gleichen Zielort integriert. Gleichzeitig erfolgt während des gemeinsamen Transports des Schlammes und der festen Abfälle im Müllsammelfahrzeug durch den eine Mischeinrichtung umfassenden Müllsammelaufbau bereits eine Vermischung der einzelnen im Müllsammelaufbau enthaltenden Komponenten zu einem Abfall- Schlamm-Gemisch, dessen Vermischungsgrad eine unmittelbare Weiterbehandlung oder Entsorgung in der bei der Behandlung fester Abfälle üblichen Weise zuläßt, ohne daß es einer weiteren Vermischung der Einzelkomponenten in stationären Anlagen am Zielort bedarf. Transportprobleme, wie sie bei einem Transport von Klärschlamm allein insbesondere über größere Entfernungen auftreten, sind hierdurch ausgeschlossen, und der Transportweg wird zur Herstellung des insoweit verarbeitungsfähigen Abfallschlamm-Gemisches durch Vermischung der Komponenten genutzt. In Abhängigkeit von der Zusammensetzung des auf diese Weise am Zielort angelieferten Abfall-Schlamm-Gemisches sowohl hinsichtlich der Festabfallanteile wie auch der Schlammanteile ist insbesondere eine Verbrennung des Abfall-Schlamm-Gemisches in herkömmlichen Verbrennungsanlagen für feste Abfälle, aber auch eine Verwertung des Gemisches. ggf. nach einer weiteren Behandlungsphase, als Kompost oder Dünger, oder eine unmittelbare Ablagerung des angelieferten Abfall-Schlamm-Gemisches auf einer Deponie möglich.

Das erfindungsgemäße Verfahren zur Klärschlammbeseitigung läßt sich ohne weiteres und in bedarfsgerechter Form in die üblicherweise in den Kommunen bestehenden Entsorgungssysteme für feste Abfälle, wie insbesondere Hausmüll, mittels Müllsammelfahrzeugen mit einem eine Mischeinrichtung umfassenden behälterförmigen Müllsammelaufbau einbeziehen, wobei dieser Behälteraufbau in an sich bekannter Weise als Drehtrommel oder auch als Zwangsmischer ausgeführt sein kann, um die Vermischung der Festabfall- bzw. Schlammkomponenten während der Müllsammeltour des Müllsammelfahrzeugs bis zur Ablieferung des Abfall-Schlamm-Gemisches am Zielort in dem erforderlichen Umfang herbeizuführen. Dabei können die Mischwerkzeuge des Müllsammelaufbaus insbesondere auch solche Einrichtungen aufweisen, die ein Aufschlitzen bzw. Zerteilen von Kunststoffbeuteln oder -behältern und ähnlichen Artikeln im Müll im Interesse einer guten Durchmischung sämtlicher Müllbestandteile aufweisen.

In einer einfachen, unmittelbar in die Praxis umzusetzenden Form kann somit das Verfahren nach der Erfindung mit Hilfe an sich bekannter Müllsammelfahrzeuge in Form von Drehtrommelfahrzeugen ausgeübt werden. Der Müllsammelaufbau des Fahrzeugs ist hierbei als Drehtrommel ausgebildet und stellt eine Mischeinrichtung für die eingefüllten Komponenten, d.h. im Falle der Erfindung, feste Abfälle und Schlammprodukte, dar. Das Müllsammelfahrzeug ist hierbei mit einer einzigen Schüttvorrichtung mit zugehöriger Hubkippeinrichtung ausgerüstet, durch die sowohl der feste Abfall als auch der zu beseitigende Schlamm in den Müllsammelaufbau bzw. die Drehtrommel in den zweckentsprechenden Anteilen eingefüllt wird. In Abhängigkeit von der Entsorgungssituation und/oder der beabsichtigten weiteren oder abschließenden Behandlung des im Müllsammelfahrzeug gebildeten Abfall-Schlamm-Gemisches können auch besondere Ausgestaltungen der im Rahmen des Erfindungskonzeptes zum Einsatz kommenden Fahrzeuge vorgesehen sein, wie sie an späterer Stelle noch näher beschrieben werden.

Der aus den angelieferten Abwässern, Fäkalschlämmen und dgl. in der Kläranlage auf mechanischem und biologisch/chemischem Wege aufbereitete Klärschlamm oder vergleichbarer Abfallschlamm wird zunächst durch geeignete Entwässerungs- bzw. Trocknungsverfahren auf einen Trockensubstanzgehalt von zumindest etwa 15 %, vorzugsweise etwa 20 bis 40 %, gebracht. Für diesen Behandlungsschritt können bekannte aerobe oder anaerobe Methoden der Stapelung bzw. Eindickung herangezogen werden, die stationär in der Kläranlage oder auch von mobilen Behandlungseinheiten durchgeführt werden. Diese Behandlung des Klärschlamms zur Heraufsetzung seines Trockensubstanzgehalts kann auch unter Zugabe von Additiven, wie Steinmehl, Kalk, Stäuben, Altpapier, Sägemehl und dgl. Substanzen, erfolgen, deren Anwendung sich nach der beabsichtigten Art der Entsorgung bzw. Weiterverwendung des Klärschlamms als Teil des nach dem erfindungsgemäßen Verfahren gebildeten Abfall-Schlamm-Gemisches zum Beispiel als Verbrennungsmaterial in einem Müllheizkraftwerk oder als Kompostierungsmaterial in einer Kompostieranlage richten kann.

Der auf diese Weise in eine dickflüssige, breiige, pastöse oder auch krümelige Konsistenz überführte Klärschlamm wird, vorzugsweise als Dickschlamm mit etwa 20 bis 40 % Trockensubstanz, in Umleerbehältern am Ort seiner Entstehung bzw. Behandlung, d.h. in der Regel an einer Kläranlage, zwischengespeichert.

Die Umleerbehälter können als einfache, von den in der Ausübung des erfindungsgemäßen Verfahrens zum Einsatz kommenden Fahrzeugen handhabbare Behälter mit einem ihrer Kontur entsprechenden Füllraum gebildet sein, wobei jedoch dieser Füll oder Aufnahmeraum nach einer abgewandelten Ausführungsform eine innere Gefacheinteilung aufweisen kann, in der der Schlamm in waagerechten oder senkrechten Schichten, die mit anderen, überwiegend feste Abfälle enthaltenden waagerechten oder senkrechten Schichten abwechseln, gespeichert werden kann. Wird ein solcher Umleerbehälter mittels einer Hubkippvorrichtung von oben in den Müllsammelaufbau eines Müllsammelfahrzeugs durch die entsprechende Schüttöffnung entleert, so tritt bei der Entleerung der Behälter bereits eine Vorvermischung der Feststoff- und der Schlammbestandteile des Behälterfüllraums durch gegenseitige Schichtendurchdringung ein. Dies begünstigt eine schnelle und gute Vermischung der Schlamm- und Feststoffbestandteile im Müllsammelaufbau des Sammelfahrzeugs.

Für die beabsichtigte Weiterbehandlung oder -verarbeitung des Abfall-Schlamm-Gemisches erweist es sich als zweckmäßig, die Menge des dem festen Abfall im Müllsammelaufbau des Sammelfahrzeugs zugegebenen Schlammes auf etwa 20 bis 30 Gew.-% des Abfall-Schlamm-Gemisches festzulegen. So zeigt sich beispielsweise, daß ein Anteil von 20 % Klärschlamm mit etwa 30 % Trockensubstanz im Abfall-Schlamm-Gemisch bei dessen Verwendung als Verbrennungsmaterial in einem Müllheizkraftwerk in der Regel keine negative Beeinflussung des Heizwertes bedeutet. Auch bestehen bei solchen Klärschlammanteilen keine Bedenken hinsichtlich der Deponiestandfestigkeit.

In der praktischen Ausführung des erfindungsgemäßen Verfahrens erweist es sich als vorteilhaft, eine erste Menge des Schlammes dem Müllsammelaufbau des Fahrzeugs erst dann zuzugeben, nachdem bereits fester Abfall in den Müllsammelaufbau eingefüllt worden ist. Dies begünstigt den Vermischungsvorgang. Nachdem eine Menge des Schlammes zugegeben worden ist, wird zweckmäßig weiterer fester Abfall entsprechend der Aufnahmekapazität des Müllsammelaufbaus eingefüllt und in den Mischvorgang einbezogen.

Wie es auch bei den derzeit gehandhabten Müllsammelsystemen für insbesondere Hausmüll üblich ist, wird auch in der Ausübung des erfindungsgemäßen Verfahrens der feste Abfall in zeitlichen Abständen jeweils als Teilmenge entsprechend dem Inhalt des bei jedem Einfüllvorgang während der Tour des Müllsammelfahr zeugs entleerten Müllsammelbehälters in den Müllsammelaufbau eingefüllt. Die zuzusetzende Schlammenge kann dabei als Ganzes oder ihrerseits in mehreren Teilmengen in den Zeitabständen zwischen der Einfüllung festen Abfalls in den Müllsammelaufbau des Fahrzeugs eingefüllt werden. Es ist aber je nach den Gegebenheiten auch möglich, den festen Abfall als Teilmengen in zeitlichen Abständen, wie oben ausgeführt, und den Schlamm im wesentlichen kontinuierlich in den Müllsammelaufbau des Fahrzeugs einzuspeisen. Hierfür sieht die Erfindung entsprechend eingerichtete Fahrzeuge vor.

Die diesbezüglichen Ausgestaltungen sowie weitere Merkmale und Vorteile der Erfindung ergeben sich aus den Ansprüchen und der nachstehenden Beschreibung von Ausführungsbeispielen der Erfindung in Verbindung mit der Zeichnung. In der Zeichnung zeigen:

Fig. 1 ein Fließbild zur Veranschaulichung des Verfahrensablaufs bei der Durchführung des erfindungsgemäßen Verfahrens und

Fig. 2 bis 4 schematische Darstellungen jeweils einer Ausübungsvariante des erfindungsgemäßen Verfahrens.

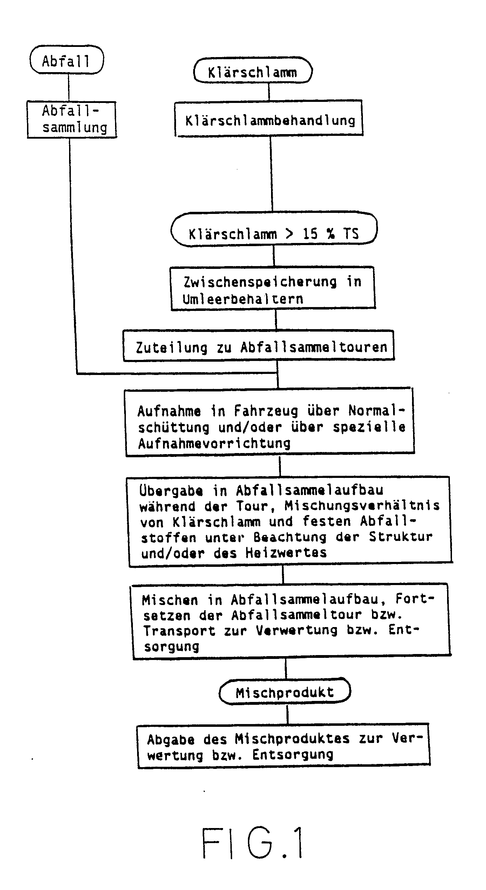

Wie sich aus dem Fließbild gemäß Fig. 1 ergibt, erfährt der Klärschlamm zunächst eine Behandlung durch Entwässerung bzw. Trocknung, ggf. auch unter Einbeziehung geeigneter Additive, wodurch der Trockensubstanzanteil von ursprünglich etwa 6 % des Dünnschlamms auf zumindest 15 %, d.h. auf Dickschlammniveau, angehoben wird. In dieser Form wird der Klärschlamm in Umleerbehältern an der Kläranlage zwischengespeichert. Aus den Umleerbehältern wird der Klärschlamm Abfallsammeltouren eines Müllsammelfahrzeugs zugeteilt, das parallel zur Klärschlammbereitstellung in den Umleerbehältern eine Abfallsammeltour zum Einsammeln stückigen bzw. festen Abfalls, wie insbesondere Hausmüll, durchführt und auf dieser Tour nach einem vorgegebenen Zeitplan die Kläranlage zur Aufnahme von Klärschlamm zusätzlich zu dem bereits im Müllsammelaufbau befindlichen festen Abfall anfährt. Die Aufnahme des Klärschlamms in das Müllsammelfahrzeug kann über eine Normalschüttung z.B. konventioneller Art, die mit einer Hubkippvorrichtung zum Entleeren von Müllsammel behältern arbeitet, oder auch über spezielle Aufnahmevorrichtungen, wie sie an späterer Stelle näher beschrieben werden, erfolgen. Die Übergabe des Klärschlamms in den mit einer Mischeinrichtung ausgerüsteten Müll- bzw. Abfallsammelaufbau während der Tour des Müllsammelfahrzeugs und dessen Fortsetzung der Tour gewährleisten eine gründliche Vermischung des eingegebenen Schlammanteils mit den festen bzw. stückigen Abfallstoffen. Das Mischungsverhältnis von Klärschlamm und festen Abfallstoffen kann unter Beachtung der Struktur und/oder des Heizwertes der beteiligten Substanzen reguliert werden. Bei Beendigung der Müllsammeltour am Zielort zur Verwertung bzw. Entsorgung ist in dem als Mischer arbeitenden Abfallsammelaufbau ein Mischprodukt in Form eines Abfall-Schlamm-Gemisches gebildet, das am Zielort in einer Form abgegeben wird, die ohne weiteres dessen weitere Verwertung bzw. Entsorgung in der von der Behandlung festen Abfalls her gewohnten Weise und mit den hierzu gebräuchlichen mechanischen Einrichtungen ermöglicht.

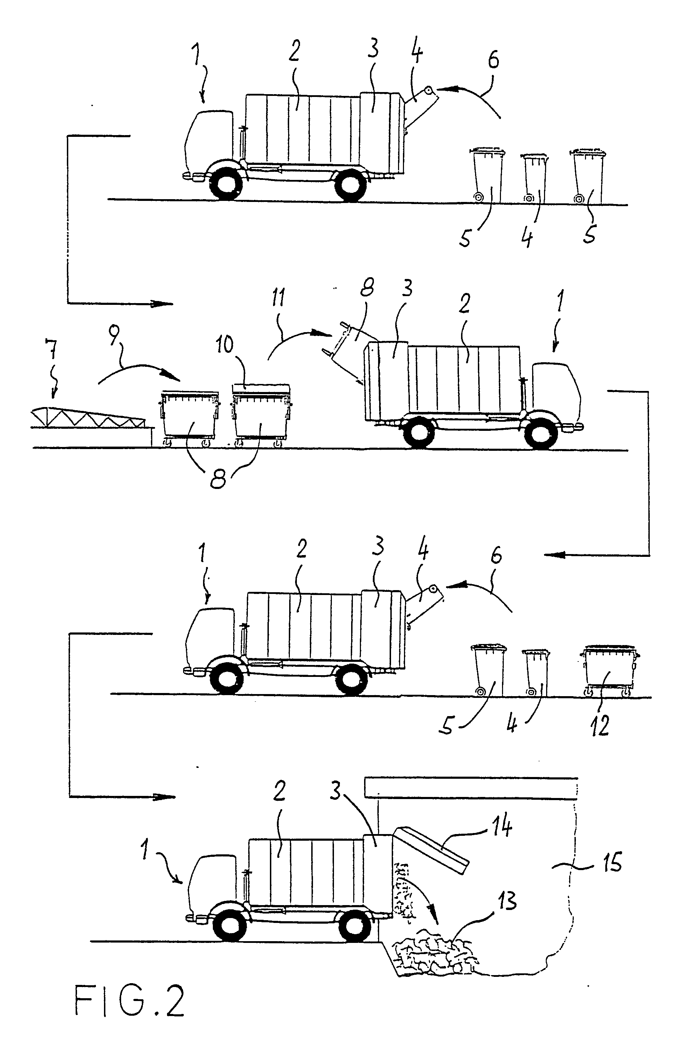

In Fig. 2 ist mit der Bezugszahl 1 als Ganzes ein Müllsammelfahrzeug bezeichnet, das einen Müllsammelaufbau 2 in Form einer Drehtrommel besitzt. Die Drehtrommel 2, die in der Zeichnung nur mit ihrer äußeren Verkleidung zur Darstellung gebracht ist, ist um eine horizontale Achse drehbar und wirkt mit einer Schüttvorrichtung 3 zusammen, die ihrerseits auf dem Fahrgestellrahmen des Müllsammelfahrzeugs 1 abgestützt ist. Das Müllsammelfahrzeug 1 befindet sich entsprechend dem dargestellten Beispiel auf einer Müllsammeltour zum Einsammeln von Hausmüll aus Müllgroßbehältern 4 mit einem Fassungsvermögen von z.B. 120 l und Müllgroßbehältern 5 mit einem Fassungsvermögen von z.B. 240 l. Die Müllbehälter 4 und 5 werden in an sich bekannter Weise jeweils über eine nicht näher dargestellte, der Schüttvorrichtung 3 zugeordnete Hubkippvorrichtung in den Müllsammelaufbau bzw. die Drehtrommel 2 entleert, wie es durch den Pfeil 6 veranschaulicht ist.

Zu einem vorgegebenen Zeitpunkt innerhalb der Müllsammeltour fährt das Müllsammelfahrzeug 1 eine bei 7 schematisch angedeutete Kläranlage an, an der Umleerbehälter 8 für den in der Kläranlage 7 bereits vorentwässerten Klärschlamm bereitstehen. Wie durch den Pfeil 9 angedeutet wird der Klärschlamm von oben in den Behälter 8 eingefüllt. Bei Beendigung des Füllvorgangs wird der Behälter 8 durch einen Deckel 10 verschlossen. Die Umleerbehälter 8 können eine Ausführungsform aufweisen, wie sie von Müllgroßbehältern mit einem Fassungsvermögen von z.B. 1100 l an sich bekannt ist. Mittels der gleichen Schüttvorrichtung 3, die auch dem Entleeren der Müllbehälter 4 und 5 in den Müllsammelaufbau 2 dient, wird an der Kläranlage 7 über die Hubkippvorrichtung entsprechend dem Pfeil 11 der jeweils zur Entleerung anstehende Umleerbehälter 8 angehoben und in den Müllsammelaufbau 2 entleert, um mit dem in der im Sammelbetrieb ständig umlaufenden Drehtrommel des Sammelaufbaus 2 bereits enthaltenen festen bzw. stückigen Abfall vermischt zu werden. Danach wird die Sammeltour vom Müllsammelfahrzeug 1 fortgesetzt, wobei zu wiederholten Malen Müllsammelbehälter 4 und 5 oder auch Müllgroßbehälter 12 mit einem Fassungsvermögen von z.B. 1100 l in die umlaufende Drehtrommel des Müllsammelaufbaus 2 entleert und in das bereits erzeugte Abfall-Schlamm-Gemisch einbezogen werden. Die Müllsammeltour endet am Zielort, beispielsweise einer Müllverbrennungsanlage, wo das während der Müllsammeltour gebildete Abfall-Schlamm-Gemisch 13 unter Öffnen einer Heckklappe 14 der Schüttvorrichtung 3 in einen Müllbunker 15 abgekippt und weiterverarbeitet bzw. der Verbrennung zugeführt wird.

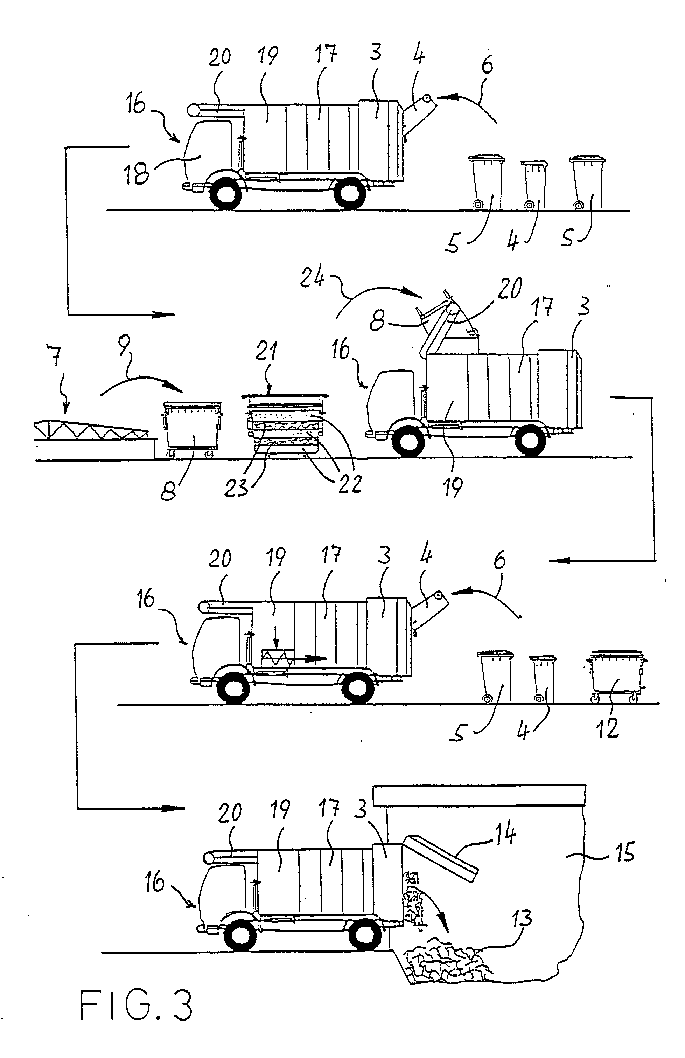

Bei dem Ausführungsbeispiel gemäß Fig. 3 kommt ein Müllsammelfahrzeug 16 zum Einsatz, das wie das Sammelfahrzeug 1 mit einem eine Drehtrommel umfassenden Müllsammelaufbau 17 versehen ist, der wie der Müllsammelaufbau 2 des Fahrzeugs 1 mit einer Schüttvorrichtung 3 zusammenwirkt und insofern die gleiche Arbeitsweise wie das Sammelfahrzeug 1 zur Aufnahme der Müllsammelbehälter 4 und 5 zu deren Entleerung aufweist, der jedoch in seiner Länge gegenüber dem Müllsammelaufbau 2 verkürzt ist. In den dadurch geschaffenen Zwischenraum zwischen dem Müllsammelaufbau 17 und dem Fahrerhaus 18 ist ein Speicherbehälter 19 für Klärschlamm angeordnet, der seinerseits auf dem Fahrgestellrahmen abgestützt ist und für das Einfüllen von Klärschlamm von oben im Bereich der Dachebene des Speicherbehälters 19 mit einer Überkopfladevorrichtung 20 versehen ist.

Auf der Müllsammeltour erfolgt die übliche Schüttung der festen Abfälle über die Schüttvorrichtung 3 in den Müllsammelaufbau 17, und es wird wiederum zu einem vorgegebenen Zeitpunkt innerhalb der Müllsammeltour die Kläranlage 7 angefahren, an der Schlammumleerbehälter 8 befüllt werden bzw. für eine Eingabe in das Müllsammelfahrzeug 16 bereitstehen. Dabei ist in Fig. 3 ein Umleerbehälter 21 dargestellt, dessen Aufnahmeraum mit einer inneren Gefacheinteilung versehen ist, die waagerechte Schichten 22 und 23 im Aufnahmeraum bildet. Die Schichten 22 sind von Klärschlamm eingenommen, während die Schichten 23 aus anderen, zumindest teilweise festen Abfallstoffen oder sonstigen festen Substanzen, ggf. in Verbindung mit Schlammanteilen, bestehen. Beim Einfüllen eines solchen Umleerbehälters 21 mittels der Überkopfladevorrichtung 20 entsprechend dem Pfeil 24 durch eine entsprechende Schüttöffnung von oben in den Speicherbehälter 19 erfolgt eine Vorvermischung der im Umleerbehälter 21 enthaltenen Komponenten durch gegenseitige Durchdringung der Schichten 22 und 23.

Bei dem in dieser Weise mit einem Schlammspeicherbehälter 19 ausgerüsteten Müllsammelfahrzeug 16 muß die Aufnahme des Klärschlamms im Speicherbehälter 19 nicht notwendigerweise während der Müllsammeltour erfolgen, sie kann vielmehr bereits vor Beginn der Müllsammeltour stattfinden. Zur Einspeisung von Klärschlamm in

den Müllsammelaufbau 17 während der beginnenden bzw. sich fortsetzenden Müllsammeltour des Müllsammelfahrzeugs 16 ist der Schlammspeicherbehälter 19 mit einer in den Müllsammelaufbau 17 ausmündenden Austragvorrichtung 25 versehen. Hierbei kann es sich um ein geeignetes Förder- und Dosieraggregat, beispielsweise in Form einer Dickstoffpumpe, handeln, mit der der Klärschlamm der Drehtrommel des Müllsammelaufbaus 17 vorzugsweise kontinuierlich während der Müllsammeltour zugeführt wird. Auf diese Weise läßt sich eine besonders innige Vermischung des Klärschlamms mit den festen Abfallstoffen im Müllsammelaufbau 17 erreichen.

Bei Beendigung der Sammeltour wird das erzeugte Abfallschlammgemisch 13 in der bereits beschriebenen Weise am Zielort abgeschüttet.

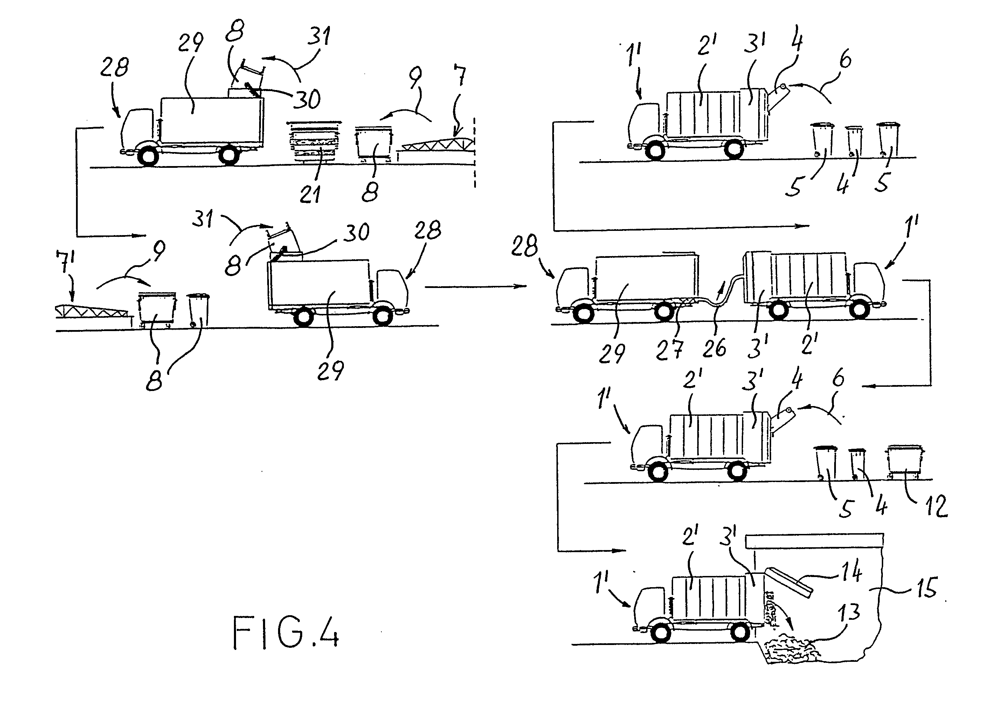

Die Fig. 4 veranschaulicht ein System der Klärschlammentsorgung, das mit einem Müllsammelfahrzeug 1′ arbeitet, das in allen wesentlichen Merkmalen mit dem Müllsammelfahrzeug 1 des anhand der Fig. 2 erläuterten Systems übereinstimmt. Zusätzlich ist der Müllsammelaufbau 2′ mit einer sich durch die Schüttvorrichtung 3′ hindurcherstreckenden, in der Zeichnung nicht näher dargestellten Verbindungsvorrichtung zum Anschließen einer Schlammförderleitung 26 versehen, durch die Klärschlamm in den Müllsammelaufbau 2′ eingespeist werden kann. Die Schlammförderleitung 26 ist Teil einer Austrag- und Verbindungseinrichtung 27 zum Ausfördern von Klärschlamm aus einem Schlammspeicherfahrzeug 28 und zur Einspeisung des Schlamms in den Müllsammelaufbau 2′.

Das Schlammspeicherfahrzeug 28 besitzt einen im wesentlichen den gesamten Fahrzeugaufbau einnehmenden Schlammspeicherbehälter 29 mit einer Schüttvorrichtung 30, mit deren Hilfe die Umleerbehälter 8 bzw. 21 an der Kläranlage 7 entsprechend dem Pfeil 31 aufgenommen und von oben durch eine Schüttöffnung im Bereich der Dachebene des Speicherbehälters 29 in diesen entleert werden können. Hierbei kann die Klärschlammabfuhr mittels des Schlammspeicherfahrzeugs 29 zeitlich parallel zu der vom Müllsammelfahrzeug 1′ gefahrenen Müllsammeltour erfolgen. Es besteht damit insbesondere die Möglichkeit, je nach der anfallenden Klärschlammenge nicht nur eine Kläranlage 7, sondern auch mehrere Kläranlagen 7′ durch Aufnahme der hier in den Umleerbehältern 8 zwischengespeicherten Schlammengen zu entsorgen.

An von der Disposition und in Abhängigkeit von den jeweiligen Entsorgungsbedingungen festzulegenden Schnittstellen bzw. Treffpunkten mit dem Müllsammelfahrzeug 1′ erfolgt eine Übergabe des Klärschlamms aus dem Schlammspeicherfahrzeug 28 in eines oder mehrere der Abfallsammelfahrzeuge 1′ über die jeweils an diese anzuschließende Schlammförderleitung 26 der Austrag-und Verbindungseinrichtung 27. Auf der weiteren Sammeltour des Müllsammelfahrzeugs 1′ bzw. der Müllsammelfahrzeuge 1′ werden die Schlamm- und Feststoffbestandteile im Müllsammelaufbau 2′ in der bereits beschriebenen Weise zu dem Abfall-Schlamm-Gemisch 13 vermischt und in dieser Form schließlich am Zielort abgegeben. Insoweit kann auf eine nochmalige Beschreibung dieser Vorgänge verzichtet werden. Im übrigen wurden in den Fig. 2, 3 und 4 zur Bezeichnung gleicher bzw. übereinstimmender Teile der einzeln dargestellten Systeme die gleichen Bezugszahlen verwendet.

Die bei der Ausübung des erfindungsgemäßen Verfahrens zur Beseitigung von Klärschlamm und dgl. Schlammprodukten zum Einsatz kommenden Fahrzeuge der anhand der Fig. 2, 3 und 4 beschriebenen Systeme können in zahlreichen Einzelheiten im Rahmen der Erfindung abgewandelt werden, wobei jedoch auch ohne weiteres handelsübliche Spezialfahrzeuge wie Tankwagen zum Transport des Klärschlamms und vor allem auch herkömmliche Müllsammelfahrzeuge wie Drehtrommelfahrzeuge mit der Möglichkeit der Aufnahme von festen Abfällen wie auch von Schlammprodukten durch die vorhandene Schüttvorrichtung zum Einsatz kommen können. Dies gilt grundsätzlich auch für die im Rahmen der Erfindung zum Einsatz kommenden Schlamm-Umleerbehälter, bei denen lediglich Mittel vorgesehen sein müssen, die gewährleisten, daß die Umleerbehälter mit einer Hubkippvorrichtung oder dgl. Lade- und Schüttvorrichtung eines Sammelfahrzeugs für eine Einfüllung des Schlamms in einen fahrzeugseitigen Sammelbehälter in Mitnahmeeingriff gebracht werden können.

Wenn auch im übrigen vorstehend bei der Beschreibung der Ausübungsvarianten des erfindungsgemäßen Verfahrens die verwendeten Müll- und/oder Schlammsammel- bzw. -speicherfahrzeuge als Arbeitskraftfahrzeuge in Gestalt nicht an Schienen gebundener Landfahrzeuge dargestellt und beschrieben worden sind, so versteht sich doch, daß grundsätzlich auch entsprechend ausgerüstete schienengebundene Fahrzeuge oder Wasserfahrzeuge, ggf. in Kombination mit den schienenunabhängigen Landfahrzeugen, im Rahmen des erfindungsgemäßen Konzepts als derartige Fahrzeuge Anwendung finden können.

**Ansprüche**

1. Verfahren zur Beseitigung von Klärschlamm und dgl. Schlammprodukten gemeinsam mit Hausmüll und dgl. festen Abfällen, bei dem der Schlamm mit dem festen Abfall vermischt und das Abfall-Schlamm-Gemisch einem weiteren oder abschließenden Behandlungs- bzw. Entsorgungsschritt unterzogen wird, dadurch gekennzeichnet, daß der feste Abfall von Müllsammelfahrzeugen (1;1′;16) mit einem eine Mischeinrichtung umfassenden behälterförmigen Müllsammelaufbau (2;2′;17) aufgenommen und zu einem Zielort transportiert wird, dem Müllsammelaufbau (2;2′;17) des Fahrzeugs (1;1′;16) vor Erreichen des Zielortes eine Menge des Schlamms zugegeben wird und der feste Abfall und der Schlamm während des Transports zum Zielort miteinander zu dem Abfall-Schlamm-Gemisch im Müllsammelaufbau (2;2′;17) des Fahrzeugs (1;1′;16) vermischt werden.

2. Verfahren nach Anspruch 1, dadurch gekennzeichnet, daß der Schlamm in zumindest einem seiner Zugabe zum Müllsammelaufbau (2;2′;17) voraufgegangenen Behandlungsschritt auf einen Trockensubstanzgehalt von zumindest etwa 15 %, vorzugsweise etwa 20 bis 40 %, gebracht worden ist.

3. Verfahren nach Anspruch 1 oder 2, dadurch gekennzeichnet, daß der Schlamm vor seiner Zugabe zum Müllsammelaufbau (2;2′;17) in Umleerbehältern (8;21) am Ort seiner Entstehung bzw. Behandlung zwischengespeichert wird.

4. Verfahren nach Anspruch 3, dadurch gekennzeichnet, daß der Schlamm in den Umleerbehältern (21) in Schichten (22), die mit anderen, überwiegend feste Abfälle enthaltenden Schichten (23) abwechseln, zwischengespeichert wird.

5. Verfahren nach einem der Ansprüche 1 bis 4, dadurch gekennzeichnet, daß die Menge des dem festen Abfall im Müllsammelaufbau (2;2′;17) zugegebenen Schlammes etwa 20 bis 30 Gew.% des Abfall-Schlamm-Gemisches beträgt.

6. Verfahren nach einem der Ansprüche 1 bis 5, dadurch gekennzeichnet, daß in den Müllsammelaufbau (2;2′;17) des Fahrzeugs (1;1′;16) nach der Zugabe einer Menge des Schlammes weiterer fester Abfall eingefüllt und in den Mischvorgang einbezogen wird.

7. Verfahren nach einem der Ansprüche 1 bis 6, dadurch gekennzeichnet, daß eine erste Menge des Schlammes dem Müllsammelaufbau (2;2′;17) des Fahrzeugs (1;1′;16) zugegeben wird, nachdem bereits fester Abfall in den Müllsammelaufbau (2;2′;17) eingefüllt worden ist.

8. Verfahren nach einem der Ansprüche 1 bis 7, dadurch gekennzeichnet, daß der feste Abfall in zeitlichen Abständen jeweils als Teilmenge und die Schlammenge als Ganzes oder ihrerseits in mehreren Teilmengen in den Zeitabständen zwischen der Einfüllung festen Abfalls in den Müllsammelaufbau (2;2′) des Fahrzeugs (1;1′) eingefüllt wird.

9. Verfahren nach einem der Ansprüche 1 bis 7, dadurch gekennzeichnet, daß der feste Abfall als Teilmengen in zeitlichen Abständen und der Schlamm im wesentlichen kontinuierlich in den Müllsammelaufbau (17) des Fahrzeugs (16) eingespeist wird.

10. Fahrzeug zur Ausführung des Verfahrens nach einem der Ansprüche 1 bis 9, dadurch gekennzeichnet, daß es als Müllsammelfahrzeug (1;1´;16) mit einem eine Mischeinrichtung umfassenden behälterförmigen Müllsammelaufbau (2;2´;17) ausgebildet ist.

11. Fahrzeug nach Anspruch 10, dadurch gekennzeichnet, daß es mit einer Schüttvorrichtung (3) ausgerüstet ist, die für eine Einfüllung sowohl von festem Abfall als auch von Schlamm in den Müllsammelaufbau (2) geeignet ist.

12. Fahrzeug nach Anspruch 10, dadurch gekennzeichnet, daß es zusätzlich zu dem Müllsammelaufbau (17) einen Schlammspeicherbehälter (19) umfaßt, der Müllsammelaufbau (17) und der Schlammspeicherbehälter (19) jeweils eine eigene Schüttvorrichtung (3 bzw. 20) zur Aufnahme von festen Abfällen bzw. Schlamm aufweisen und der Schlammspeicherbehälter (19) mit einer in den Müllsammelaufbau (17) ausmündenden Austragvorrichtung (25) zum Einspeisen von Schlamm für eine Vermischung mit im Müllsammelaufbau (17) enthaltenen festen Abfällen versehen ist.

13. Fahrzeug nach Anspruch 10, dadurch gekennzeichnet, daß der Müllsammelaufbau (2´) mit einer Verbindungsvorrichtung zum Anschließen einer Schlammförderleitung (26) für eine Einspeisung von Schlamm in den Müllsammelaufbau (2´) versehen ist.

14. Fahrzeug zur Ausführung des Verfahrens nach einem der Ansprüche 1 bis 8, in Verbindung mit einem Müllsammelfahrzeug nach Anspruch 13, dadurch gekennzeichnet, daß es als Schlammspeicherfahrzeug (28) mit einem im wesentlichen den gesamten Fahrzeugaufbau einnehmenden Schlammspeicherbehälter (29) ausgebildet ist und der Speicherbehälter (29) mit einer Schüttvorrichtung (30) zur Aufnahme von Schlamm und mit einer Austrag-und Verbindungseinrichtung (27) zum Ausfördern des Schlammes und dessen Einspeisung in den Müllsammelaufbau (2´) des Müllsammelfahrzeugs (1´) versehen ist.

15. Umleerbehälter für Klärschlamm und dgl. Schlammprodukte, dadurch gekennzeichnet, daß er mit einer Hubkippvorrichtung oder dgl. Ladevorrichtung (3;20;30) eines Sammelfahrzeugs (1;16;28) für eine Einschüttung des Schlammes in einen fahrzeugseitigen Sammelbehälter (2;19;29) in Mitnahmeeingriff bringbar ist.

16. Umleerbehälter nach Anspruch 15, dadurch gekennzeichnet, daß sein Aufnahmeraum mit einer inneren Gefacheinteilung für eine Aufnahme von Schlamm und anderen Abfallstoffen in miteinander abwechselnden Schichten (22,23) versehen ist.

Abfall

Abfall-
sammlung

Klärschlamm

Klärschlammbehandlung

Klärschlamm > 15 % TS

Zwischenspeicherung in
Umleerbehaltern

Zuteilung zu Abfallsammeltouren

Aufnahme in Fahrzeug über Normalschüttung und/oder über spezielle
Aufnahmevorrichtung

Übergabe in Abfallsammelaufbau
während der Tour, Mischungsverhältnis
von Klärschlamm und festen Abfallstoffen unter Beachtung der Struktur
und/oder des Heizwertes

Mischen in Abfallsammelaufbau, Fortsetzen der Abfallsammeltour bzw.
Transport zur Verwertung bzw. Entsorgung

Mischprodukt

Abgabe des Mischproduktes zur Verwertung bzw. Entsorgung

FIG.1

FIG.2

FIG.3

FIG.4

EP 0 401 409 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 041 776 (CENTRO RICERCHE FIAT SPA.) * Seite 1, Zeilen 4-11,77-96; Seite 1, Zeile 124 - Seite 2, Zeile 58; Figuren * | 15 | B 09 B 3/00 |
| A | | 1,3,10-12,14 | |
| A | DE-A-2 845 763 (GOEPFERT et al.) * Seite 3, Zeilen 1-3; Seite 6, Zeile 19 - Seite 7, Zeile 2; Seite 7, Zeilen 14-27; Seite 8, Zeile 24 - Seite 9, Zeile 27; Figur * | 1,2 | |
| A | DE-A-3 402 215 (VOELSKOW) * Seite 5, Zeilen 1-12; Seite 6, Zeilen 5-13; Seite 9, Zeilen 7-23; Figur 1 * | 1,2 | |
| A | US-A-4 487 507 (VAN WYNGAARDEN) * Spalte 1, Zeilen 4-13; Spalte 2, Zeilen 10-63; Figuren * | 1,10,12 -14 | RECHERCHIERTE SACHGEBIETE (Int. Cl.5) B 09 B B 65 F |

Der vorliegende Recherchenbericht wurde für alle Patentansprüche erstellt

| Recherchenort | Abschlußdatum der Recherche | Prüfer |
|---|---|---|
| DEN HAAG | 30-01-1990 | VAN DER ZEE W.T. |